# EUROPÄISCHE PATENTSCHRIFT

(11) **EP 1 507 722 B1**
(45) Veröffentlichungstag und Bekanntmachung des Hinweises auf die Patenterteilung: **23.11.2005**
(21) Anmeldenummer: 03732365.6
(22) Anmeldetag: 14.05.2003
(51) Int. Cl.: B65G 21/20, B65G 43/08

(54) **TRANSPORTVORRICHTUNG FUER BEHAELTER**
TRANSPORT DEVICE FOR CONTAINERS
DISPOSITIF TRANSPORTEUR POUR CONTENANTS

(30) Priorität: 24.05.2002 DE 20208127 U
(43) Veröffentlichungstag der Anmeldung: 23.02.2005
(73) Patentinhaber: KRONES AG, 93068 Neutraubling (DE)
(72) Erfinder: HÜTTNER, Johann, 84066 Mallersdorf-Pfaffenberg (DE)
(86) Internationale Anmeldenummer: PCT/EP2003/005022
(87) Internationale Veröffentlichungsnummer: WO 2003/099687

(56) Entgegenhaltungen:
- DE-U- 29 501 098
- DE-U- 29 617 148
- US-A- 3 487 908
- US-A- 4 216 855
- US-A- 5 411 129

## Beschreibung

Die Erfindung betrifft eine Transportvorrichtung für Behälter, insbesondere Flaschen, Dosen oder dgl., gemäß dem Oberbegriff des Anspruchs 1.

Bei den bekannten Transportvorrichtungen dieser Art sind die Geländer einerseits und die Sensoren andererseits an separaten Halterungen gelagert und unabhängig voneinander verstellbar. Gegebenenfalls ist für die Sensoren zusätzlich eine gemeinsame Höhenverstellung zur Anpassung an unterschiedliche Behälterhöhen vorgesehen. Eine Umstellung der bekannten Transportvorrichtung auf eine andere Behältersorte ist daher äußerst zeitraubend und mühsam.

Es wurde auch schon bereits vorgeschlagen, einen Satz Sensoren einschließlich der Halterung als Ganzes austauschbar zu gestalten und im Umstellungsfalle durch einen anderen Satz Sensoren zu ersetzen (DE-OS 22 43 227). Bei dieser Lösung ist für jeden Behälterdurchmesser ein eigener Satz Sensoren mit Halterung erforderlich, was zu hohen Investitionskosten führt. Trotzdem müssen im Umstellungsfalle sowohl die Geländer als auch die Sensoren getrennt manipuliert werden.

Der Erfindung liegt die Aufgabe zu Grunde, bei einer Transportvorrichtung der eingangs genannten Art mit:einfachen Mitteln eine wesentliche Verkürzung der Umstellzeit zu ermöglichen.

Diese Aufgabe wird erfindungsgemäß durch die im Anspruch 1 angegebenen Merkmale gelöst.

Bei einer erfindungsgemäßen Transportvorrichtung müssen im Umstellungsfalle lediglich die Geländer verstellt werden; die Sensoren werden automatisch mit verstellt. Dadurch reduzieren sich die Umstellzeiten und die Beanspruchungen des Bedienungspersonals drastisch.

Vorteilhafte Weiterbildungen der Erfindung sind in den Unteransprüchen angegeben.

Im Nachstehenden wird ein Ausführungsbeispiel der Erfindung anhand der Zeichnungen beschrieben. Es zeigen:
- Fig. 1: die Draufsicht auf eine Transportvorrichtung für Behälter
- Fig. 2: den Schnitt I-I nach Fig. 1
- Fig. 3: die perspektivische Ansicht der Sensoren-Anordnung der Transportvorrichtung nach Fig. 1 und 2.

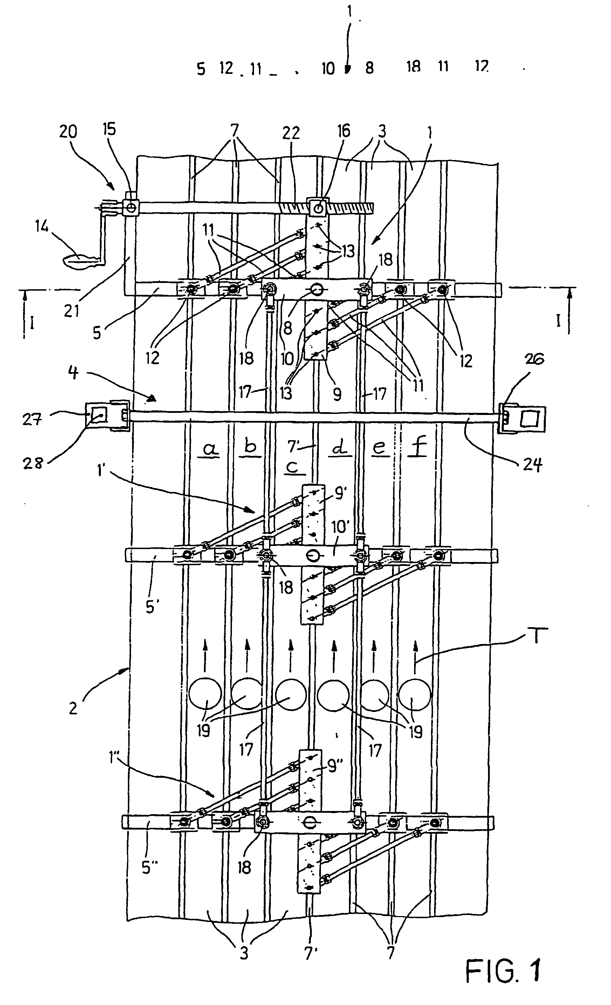

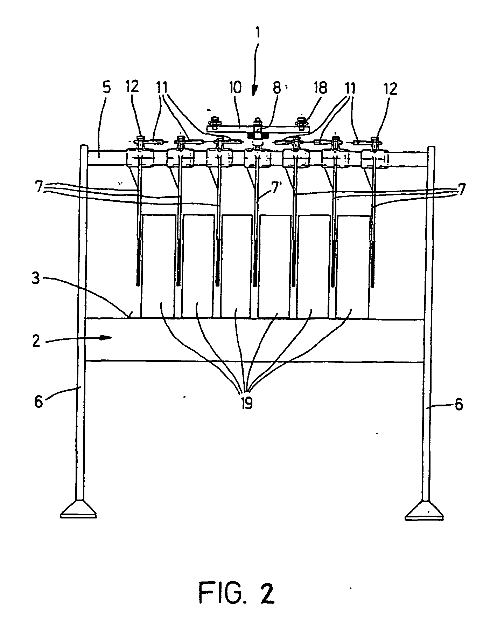

Wie aus Fig. 1 und 2 ersichtlich, weist die Transportvorrichtung 2 mehrere nebeneinander angeordnete horizontale Förderbänder 3 auf. Quer zur Transportrichtung T verlaufend ist über den Förderbändern 3 eine Führungsstange 5 angeordnet, die an ihren beiden Enden vom Gestell 6 der Transportvorrichtung 2 ortsfest gehalten wird. Entlang dieser Führungsstange 5 sind mehrere längs zur Transportrichtung ausgerichtete, parallele Führungsgeländer 7 quer zueinander verschiebbar aufgehängt, mit Ausnahme des mittleren Führungsgeländers 7', das unverrückbar an der Führungsstange 5 befestigt ist. An diesem Führungsgeländer 7' ist ein senkrecht nach oben abstehender Lagerbolzen 8 befestigt, auf dem ein in Fig. 1, parallel zu den Führungsgeländern 7 ausgerichtet dargestelltes Flacheisen 9 in einer zur Transportebene parallelen Ebene schwenkbar gelagert ist. Auf diesem ersten Flacheisen 9 ist um 90 Grad in der Schwenkebene verdreht ein zweites Flacheisen 10 verdrehfest angebracht.

Wie aus Fig. 1 erkennbar, ist jedes Führungsgeländer 7 - ausgenommen das mittlere, unverrückbare Führungsgeländer 7' - durch jeweils einen starren, an seinen Enden Drehgelenke 12 und 13 aufweisenden Stab 11 mit dem ersten Flacheisen 9 verbunden. Die am Flacheisen 9 angreifenden zweiten Drehgelenke 13 der Stäbe 11 liegen mit gleichbleibenden Zwischenabständen auf einer durch die Schwenkachse (Lagerbolzen 8) des Flacheisens 9 verlaufenden geraden Linie. Der Abstand der einzelnen Drehgelenke 13 zur Schwenkachse 8 des Flacheisens nimmt von den dem mittleren Führungsgeländer 7' benachbarten Führungsgeländern zu den außen liegenden Führungsgeländern hin zu. Die Länge der einzelnen Stäbe 11 ist so bemessen und durch Gewinde an den Drehgelenken 12 und 13 einstellbar, daß die Stäbe 11 und damit auch die Führungsgeländer 7 stets parallel zueinander ausgerichtet sind, auch wenn die Drehstellung des Flacheisens 9 verändert wird. Der beschriebene Mechanismus bildet eine Verstellvorrichtung 1.

Bei dem dargestellten Ausführungsbeispiel bewirkt eine Schwenkung des Flacheisens 9 im Uhrzeigersinn eine Abstandsverringerung und eine entgegengesetzte Schwenkung eine Abstandsvergrößerung zwischen den Führungsgeländern 7. Die von den Führungsgeländern 7 gebildeten Gassen für die Behälter 19 weisen nach einer Betätigung der Verstellvorrichtung 1 stets eine einheitliche Breite auf.

Zur Betätigung der Verstellvorrichtung 1 ist eine Betätigungsvorrichtung 20 vorgesehen, die im wesentlichen aus einer Gewindespindel 22 und einer daran befestigten Kurbel 14 besteht. Das zur Kurbel 14 weisende Ende der Gewindespindel 22 wird frei drehbar von einem Schwenklager 15 gehalten, das auf einem ortsfesten, am Ende einer Führungsstange 5 befestigten Ausleger 21 angeordnet ist. Ein zweites, eine Gewindebohrung zur Aufnahme der Gewindespindel 22 aufweisendes Schwenklager 16 ist auf dem Flacheisen 9 angeordnet. Besitzt das Gewinde der Gewindespindel 22 eine ausreichende Selbsthemmung, ist keine zusätzliche Klemmung zum Festlegen der eingestellten Geländerposition notwendig. Anstelle der Handkurbel ist auch ein motorischer Antrieb einsetzbar, vorzugsweise mit einer Steuerung, in der die den verschiedenen Behältergrößen zugeordneten Geländerpositionen aufrufbar abspeicherbar sind.

Aus der Fig. 1 ist ferner erkennbar, dass über den Förderbändern 3 mehrere Führungsstangen 5, 5' und 5'' in größeren Abständen angeordnet werden können, wobei jeder Führungsstange 5, 5', 5" eine Verstellvorrichtung 1, 1', 1" gleicher Bauart zugeordnet ist. Damit bei einer Betätigung der Betätigungsvorrichtung 20 alle Verstellvorrichtungen gleichzeitig beaufschlagt werden, sind die Flacheisen 10 der Verstellvorrichtungen durch Gestänge 17 und Gelenkköpfe 18 gekoppelt. Die Länge der Gestänge 17 ist durch Gewinde an den Gelenkköpfen 18 einstellbar.

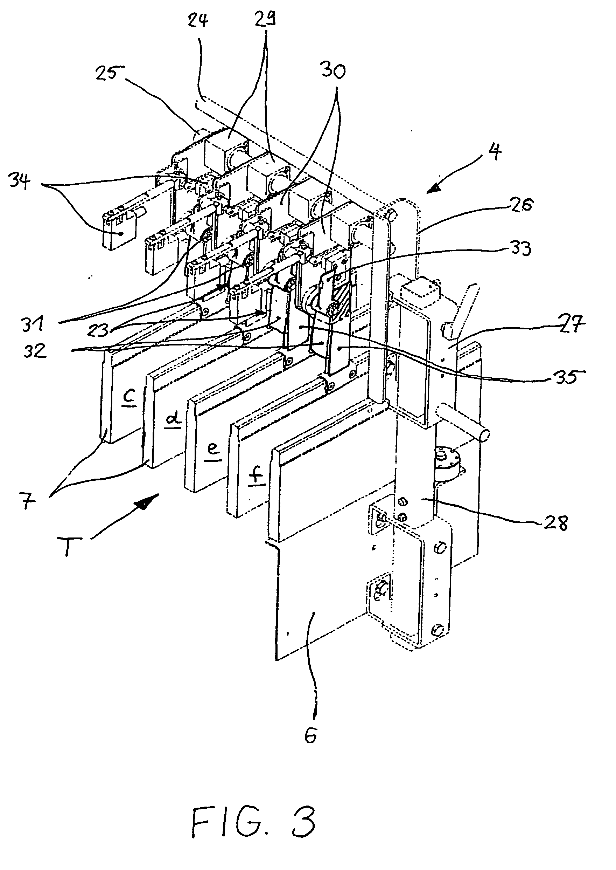

Im Bereich zwischen den Führungsstangen 5 und 5' ist über den Gassen a, b, c, d, e, f quer zur Transportrichtung T eine Halterung 4 für insgesamt sechs Sensoren 23 - jeweils einer für jede Gasse - angeordnet. Von diesen sechs Sensoren sind in Fig. 3 nur vier dargestellt. Die Halterung 4 weist zwei horizontale Stangen 24, 25 auf, die an den Enden durch jeweils einen Steg 26 miteinander verbunden sind. Die beiden Stege 26 sind mittels Klemmbügeln 27 an senkrechten Säulen 28 höhenverstellbar angeordnet. Die beiden Säulen 28 sind seitlich am Gestell 6 der Transportvorrichtung 2 befestigt. Die Halterung 4 mitsamt den daran angeordneten Sensoren 23 kann mittels der Klemmbügel 27 in der Höhe verstellt und somit an die Höhe der transportierten Behälter 19, z.B. Flaschen oder Dosen, angepasst werden.

Jeder Sensor 23 weist einen Lagerklotz 29 auf, der auf der unteren Stange 25 der Halterung 4 horizontal verschiebbar angeordnet ist. An der in Transportrichtung T gesehen linken Seite jedes Lagerklotzes 29 ist eine senkrechte Lagerplatte 30 befestigt. An der rechten Seite jeder Lagerplatte 30 ist ein horizontaler Lagerbolzen 31 befestigt, auf dem eine Schwenkklappe 32 mit einer nach oben abstehenden Schaltfahne 33 frei schwenkbar gelagert ist. Die Schwenkklappe wird durch den Kopf eines unter ihr vorbei transportierten Behälters 19 angehoben, wobei die Schaltfahne 33 verschwenkt wird. Die Stellung der Schaltfahne 33 wird durch einen oder mehrere elektrische Schaltelemente 34 abgefragt, die an der Lagerplatte 30 und/oder am Lagerklotz 29 befestigt sind. Es können z.B Lichtschranken, induktive oder kapazitive Geber eingesetzt werden. Die Schaltelemente 34 erzeugen beim Passieren eines Behälters 19 einen Zählimpuls, der in der üblichen Weise zur Abfragung des Belegungszustands der Gassen a, b, c, d, e, f verwendet werden kann.

Wie Fig. 3 zeigt, ist an jedem verstellbaren Führungsgeländer 7 im Bereich unter der Halterung 4 eine senkrecht nach oben abstehende Koppel 35 in Form eines entgegen der Transportrichtung T offenen U-Profils starr befestigt. Jede Koppel 35 umfasst mit geringem Spiel die in Transportrichtung T weisende senkrechte Kante einer Lagerplatte 30 und bildet so mit dieser eine Art Teleskopführung. Der Überdeckungsbereich zwischen Koppel 35 und Lagerplatte 30 ist in Fig. 3 schraffiert markiert.

Im Falle einer Verstellung der Führungen 7 durch die vorbeschriebene Verstellvorrichtung 1 und Betätigungsvorrichtung 20 wird jeder Sensor 23 individuell über die an seiner Lagerplatte 30 angreifende Koppel 35 automatisch mit verschoben, wobei sein seitlicher Abstand bezüglich des zugehörigen Führungsgeländers 7 unverändert bleibt. Durch eine entsprechende Breitendimensionierung der Schwenkklappen 32 ist sichergestellt, dass diese in der gewünschten Weise bei allen vorkommenden Behälterarten durch das obere Behälterende betätigt werden.

Die vorbeschriebene horizontale Verstellung der Sensoren 23 beansprucht keine zusätzliche Zeit und ist mit geringem konstruktiven Aufwand zu realisieren. Ist zusätzlich eine Höhenverstellung erforderlich, so ist auch diese mit wenigen Handgriffen mit Hilfe der Klemmbügel 27 durchführbar. Dabei findet eine höhenmäßige Relativbewegung zwischen den Koppeln 35 und den Lagerplatten 30 statt, ohne dass der gegenseitige Eingriff verloren geht.

Anstelle jeder Schwenkklappe 32 und Schaltfahne 33 ein eigenes Schaltelement 34 zuzuordnen, kann auch ein gemeinsamer Schalter für alle Schaltfahnen 33 vorgesehen sein, insbesondere in Form einer parallel zu den Stangen 24, 25 ausgerichteten Lichtschranke. Auch können die Sensoren ohne mechanische Schwenklappen oder dgl. arbeiten und eine direkte berührungslose Abtastung der Behälter 19, z.B. auf optischem oder kapazitivem Wege durchführen. Ist keine Höhenverstellung für die Sensoren vorgesehen, können die Koppeln zwischen Führungsgeländer und Sensor auch starr ausgebildet sein.

## Patentansprüche

1. Transportvorrichtung (2) für Behälter (19) mit mehreren durch quer zur Transportrichtung (T) horizontal verstellbaren Führungsgeländern (7) gebildeten Gassen (a bis f) und mit über den Gassen quer zur Transportrichtung horizontal verstellbar angeordneten Sensoren (23) für die Behälter, **dadurch gekennzeichnet, dass** die Sensoren (23) derart mit den Führungsgeländern (7) gekoppelt sind, dass sie bei einer Verstellung der Führungsgeländer (7) zwangsläufig mit verstellt werden.

2. Transportvorrichtung nach Anspruch 1, **dadurch gekennzeichnet, dass** die Sensoren (23) unmittelbar an den Führungsgeländern (7) oder deren Halterungen angeordnet sind.

3. Transportvorrichtung nach Anspruch 1, **dadurch gekennzeichnet, dass** die Sensoren (23) und die Führungsgeländer (7) jeweils an einer eigenen Halterung (4, 5) quer zur Transportrichtung (T) horizontal bewegbar angeordnet sind und jeder Sensor (23) jeweils durch eine Koppel (35) mit einem verstellbaren Führungsgeländer (7) verbunden ist.

4. Transportvorrichtung nach Anspruch 3, **dadurch gekennzeichnet, dass** die Halterung (4) der Sensoren (23) höhenverstellbar ist und die Koppeln (35) eine höhenmäßige Relativbewegung zwischen den Führungsgeländern (7) und den Sensoren (23) zulassen.

5. Transportvorrichtung nach Anspruch 4, **dadurch gekennzeichnet, dass** die Koppeln (35) als Teleskopführungen ausgebildet sind.

## Claims

1. Conveying equipment (2) for vessels (19) with several paths (a to f) formed by guide areas (7) that can be moved horizontally, transversely in relation to the conveying direction (T), and with sensors (23), for the vessels, which can be moved, by means of the paths, horizontally, transversely in relation to the conveying direction, **characterized in that** the sensors (23) are connected to the guide areas (7) such that the sensors (23) are inevitably also displaced when the guide areas (7) are displaced.

2. Conveying equipment in accordance with claim 1, **characterized in that** the sensors (23) are disposed directly on the guide areas (7) or their mountings.

3. Conveying equipment in accordance with claim 2, **characterized in that** the sensors (23) and the guide areas (7) are in each case disposed such that they can move horizontally, transversely in relation to the conveying direction, on a specific mounting means and **in that** each sensor (23) is in each case connected to a displaceable guide area (7) by connecting means (35).

4. Conveying equipment in accordance with claim 3, **characterized in that** the height of the means (4) of mounting the sensors (23) can be adjusted and **in that** the connecting means (35) enable relative movement in height between the guide areas (7) and the sensors (23).

5. Conveying equipment in accordance with claim 4, **characterized in that** the connecting means (35) is in the form of telescopic guide means.

## Revendications

1. Dispositif de transport (2) pour conteneurs (19), comprenant plusieurs voies (de a à f) formées par des rampes de guidage (7) mobiles horizontalement, transversalement à la direction de transport (T), et comprenant des capteurs (23) pour les conteneurs disposés au-dessus des voies de façon mobile horizontalement, transversalement par rapport à la direction de transport,
**caractérisé en ce que**
les capteurs (23) sont couplés avec les rampes de guidage (7) de telle sorte que lors d'un déplacement des rampes de guidage (7), ils sont obligatoirement déplacés avec celles-ci.

2. Dispositif de transport selon la revendication 1,
**caractérisé en ce que**
les capteurs (23) sont disposés directement au niveau des rampes de guidage (7) ou de leurs supports.

3. Dispositif de transport selon la revendication 1,
**caractérisé en ce que**
les capteurs (23) et les rampes de guidage (7) sont respectivement disposés de façon mobile horizontalement, transversalement à la direction de transport (T), au niveau d'un support propre (4, 5) et chaque capteur (23) est respectivement relié par un accouplement (35) à une rampe de guidage (7) mobile.

4. Dispositif de transport selon la revendication 3,
**caractérisé en ce que**
le support (4) des capteurs (23) est réglable en hauteur et les accouplements (35) autorisent un mouvement vertical relatif entre les rampes de guidage (7) et les capteurs (23).

5. Dispositif de transport selon la revendication 4,
**caractérisé en ce que**
les accouplements (35) sont configurés sous forme de guides télescopiques.
